# EUROPÄISCHE PATENTSCHRIFT

(11) **EP 1 116 931 B1**
(45) Veröffentlichungstag und Bekanntmachung des Hinweises auf die Patenterteilung: **10.09.2008**
(21) Anmeldenummer: 00810022.4
(22) Anmeldetag: 10.01.2000
(51) Int. Cl.: G01B 5/00, B29C 47/92

(54) **Vorrichtung zum Positionieren von Messgeräten**
Device for positioning a measuring apparatus
Dispositif pour le positionnement d'un appareil de mesure

(43) Veröffentlichungstag der Anmeldung: 18.07.2001
(73) Patentinhaber: Hch. Kündig & Cie. AG, 8630 Rüti/ZH (CH)
(72) Erfinder: Glanzmann, Kurt, 8630 Rüti ZH (CH)
(74) Vertreter: Hammer, Bruno

(56) Entgegenhaltungen:
- DE-A- 3 209 022
- DE-A- 4 002 884
- DE-A- 19 632 385
- DE-A- 19 707 781
- US-A- 3 762 053
- PATENT ABSTRACTS OF JAPAN vol. 1999, no. 04, 30. April 1999 (1999-04-30) -& JP 11 003771 A (MITSUBISHI ELECTRIC CORP), 6. Januar 1999 (1999-01-06)

## Beschreibung

Die Erfindung bezieht sich auf eine Vorrichtung zum Positionieren von Messgeräten nach dem Oberbegriff des unabhängigen Anspruchs 1.

Derartige Vorrichtungen werden beispielsweise verwendet, Messgeräte zum Bestimmen und Überwachen der Dicke von Kunststofffolien bei der Herstellung dieser Folien gegenüber dem Messgut zu positionieren. Kunststofffolien werden z.B. als Schlauch extrudiert. Um den Schlauch aus Kunststofffolie ist, in Bewegungsrichtung des Schlauchs betrachtet, kurz nach dem Extruder eine bogenförmige oder ringartige Bahn, möglichst konzentrisch zum Schlauch aus Kunststofffolie angeordnet. Auf dieser Bahn ist die eigentliche Messeinheit mit Messkopf und Einstellarm angeordnet. Der Einstallarm mit der Messeinheit und dem Messkopf ist bei einer kreisförmigen, ringartigen Bahn beispielsweise radial beweglich. Damit ist es möglich, den Messkopf radial korrekt gegenüber dem beispielsweise schlauchförmigen Messgut zu positionieren.

Das Messorgan des Messkopfs überwacht die Dicke einer Kunststofffolie nur auf einer Breite von wenigen Millimetern oder Zentimetern. Die Dicke von Kunststofffolien ändert in der Regel nicht plötzlich und kurzzeitig sehr stark. Unterschiede in der Dicke von Folien sind wesentlich häufiger über den Umfang einer als Schlauch extrudierten Folie. Es sind also vor allem Unterschiede in der Dicke quer zur Laufrichtung der extrudierten Folie, im sog. Querprofil zu erkennen. So genügt es in den meisten Fällen, den Messkopf z.B. periodisch über den Umfang des Schlauchs zu bewegen um Fehler in der Dicke des Folienschlauchs zu erkennen. Wenn der Messkopf auf der ringförmigen Bahn hin und her bewegt wird spricht man z.B. reversieren.

Diese Hin- und Herbewegung der Messeinrichtung über den Umfang des Schlauchs oder die Umlaufbewegung um diesen herum kann auf verschiedene Arten erzeugt werden. Auf der schienenartigen Bahn, kann beispielsweise ein Wagen angeordnet sein, auf welchem die Messeinheit befestigt ist. Der Wagen kann selbstfahrend oder sonst irgendwie angetrieben sein, z.B. mit einem umlaufenden Seil oder Riemen. Für die Übertragung der Messsignale, Steuersignale und/oder die Energieversorgung von Messeinheit und Antrieb können flexible Kabel, Schleifkontakte wie Schleifringe vorgesehen sein. Messsignale und Steuersignale können auch drahtlos übermittelt werden.

Bisherige Vorrichtungen zum Messen der Dicke von Kunststofffolien, z.B. von extrudierten Polyethylenfolien sind so aufgebaut, dass die Bahn konzentrisch um den aus einem Blaskopf austretenden Folienschlauch, zwischen Blaskopf und Wickeleinrichtung angeordnet ist. Die Messeinheit fährt auf der Bahn um die sich bewegende Folienblase. Das Messorgan der Messeinheit ist auf einem radial bewegbaren Arm montiert und wird damit gegenüber der Folie genau positioniert. Die Positionierung kann mit einer Genauigkeit im Bereich von Millimetern oder Bruchteilen von Millimetern notwendig sein. Dies insbesondere, aber nicht nur dann, wenn kein Teil des Messorgans das Messgut berühren soll, d.h. wenn die Messung berührungslos erfolgt. Der Arm kann dabei effektiv als Ganzes bewegbar sein, es kann sich jedoch auch um einen teleskopisch verlängerbaren und verkürzbaren, d.h. in radialer Richtung vor- und rückziehbaren Arm handeln, auf welchem das zu positionierende Messorgan der Messeinheit befestigt ist. Auch ein Linearmotor oder eine pneumatische Linearverstelleinrichtung kann geeignet sein. Mit einem Linearmotor kann im Bereich von wenigen, z.B. etwa 4 cm Zentimetern sehr schnell und sehr feinpositioniert werden.

Bei einer Anlage, mit welcher beispielsweise schlauchförmige Folien mit verschiedenen Durchmessern überwacht werden soll, wird der Arm, auf welchem des Messorgan befestigt ist verschieden weit ausgefahren. Um die erforderliche Stabilität zu gewährleisten, ist der Ausfahrbereich eines mit vertretbarem Aufwand gebauten Arms auf etwa 50 cm bis 85 cm beschränkt. Damit ist die Anlage auf die Verwendung für Folienschläuche mit Unterschieden im Durchmesser im Bereich von etwa einem bis zwei Metern beschränkt.

US 3 762 053 und DE 32 09 022 offenbaren Bearbeitungseinrichtungen mit Traversen die durch den Mittelpunkt einer Bahn verlaufen und winkelmässig auf einer Bahn um den Mittelpunkt drehbar sind.

Die vorliegende Erfindung bringt in dieser Hinsicht wesentliche Verbesserung. Nach der Erfindung weist die Vorrichtung die Merkmale des kennzeichnenden Teils des unabhängigen Anspruchs 1 auf. Die abhängigen Ansprüche beziehen sich auf vorteilhafte Weiterentwicklungen der Erfindung.

Die Vorrichtung zum Positionieren einer Messeinrichtung weist eine ringartige oder bogenförmige Bahn auf, auf welcher eine Messeinrichtung angebracht ist. Um das Messorgan der Messeinheit gegenüber dem Messgut radial zu positionieren, ist eine Traverse vorgesehen, welche die Messeinrichtung trägt. Zwischen Bahn und Traverse sind Lager angeordnet. Bei der Vorrichtung zum Positionieren kann die Lage der Traverse mit der Messeinrichtung gegenüber der Bahn in radialer Richtung zur Bahn verändert werden.

Mit einer Vorrichtung nach der Erfindung ist es ohne weiteres möglich, den Arbeitsbereich der Anlage wesentlich zu erweitern und die mechanische Stabilität zu gewährleisten. Wenn eine kreisförmige Bahn einen Durchmesser in der Grössenordnung von etwa sechs bis sieben Metern hat, kann der Arbeitsbereich der Messeinheit ohne weiteres im Bereich von mehreren Metern liegen. D.h. es können beispielsweise Folienschläuche mit einem Durchmesser von etwa einem Meter bis acht Meter überwacht werden, ohne dass die Genauigkeit der Positionierung schlechter würde. Es ist also mit der neuen Vorrichtung nach der Erfindung möglich eine Messeinheit, und insbesondere das Messorgan dieser Messeinheit, über einen grossen Bereich mechanisch stabil zu positionieren.

Die Erfindung wird nachstehend anhand der schematischen Zeichnungen näher erläutert. Es zeigen:
- Fig. 1.: die schematische, perspektivische Ansicht einer Vorrichtung zum Positionieren eines Messgeräts, wie es für die Messung der Dicke von extrudierten schlauchförmigen Plastikfolien verwendet werden kann, mit einer Bahn und einer Art Drehschemeln, welche eine Traverse tragen;
- Fig. 2: die schematische Aufsicht auf eine Vorrichtung zum Positionieren, wie sie in Fig. 1 dargestellt ist und in welcher die zwei extremen Lagen der Traverse auf der Bahn veranschaulicht sind.
- Fig. 3: die schematische Aufsicht auf eine Vorrichtung zum Positionieren, bei welcher die Bahn von zwei konzentrischen Ringen gebildet wird, auf denen die Traverse mit Messeinheit angeordnet ist.

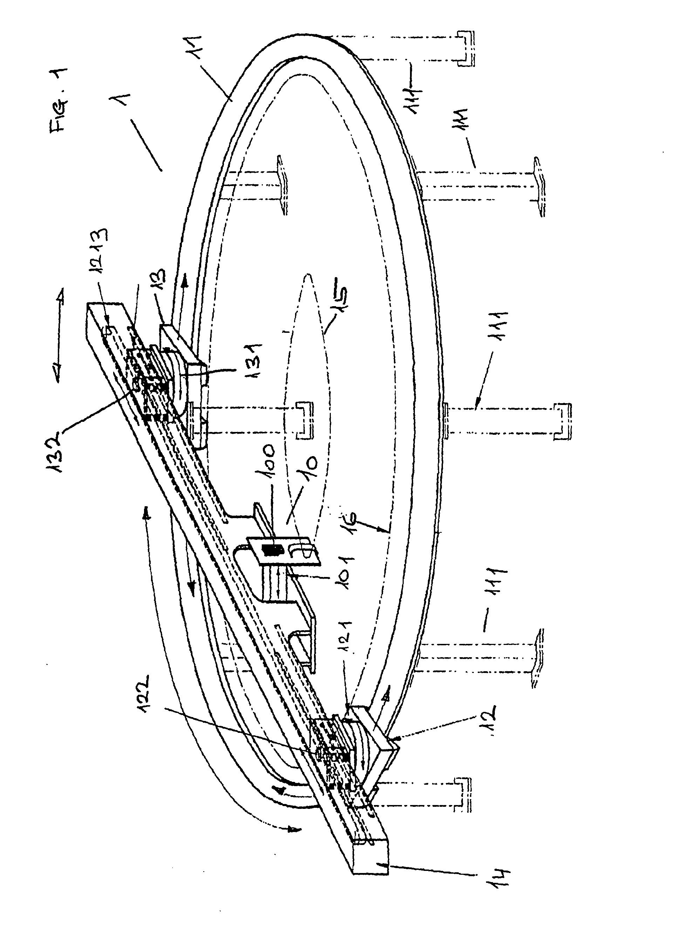

Fig. 1 zeigt eine Vorrichtung zum Positionieren 1 einer Messeinheit 10 nach der Erfindung. Auf einer kreisförmigen Bahn 11, die ringsegmentförmig ausgebildet ist, sind zwei Laufwagen angeordnet, die als Drehschemel 12, 13 gestaltet sind. Die Bahn 11 ist auf den Schienenstützen 111 montiert. Eine Traverse 14, mit der Messeinheit 10, ist auf den beiden Drehschemeln 12, 13 abgestützt und gelagert. Auf den Drehschemeln 12, 13 sind je ein Drehlager121, 131 und ein Längslager 122, 132, sog. Laufkatzen vorhanden. Damit kann die Lage der Traverse 14 gegenüber den Drehschemeln 12, 13 sowohl längs wie winkelmässig verändert werden, was erforderlich ist, und es ermöglicht, die Drehschemel 12, 13 auf der Bahn 11 zueinander hin oder voneinander weg zu bewegen. Mit dem Verändern der Lage der Traverse 14 wird auch die Position der Messeinheit 10 und insbesondere des Messorgans 100 der Messeinheit 10 verändert. Das Messorgan 100 ist auf einem vor- und rückziehbaren Teleskoparm 101 befestigt, mit welchem die Feinpositionierung des Messorgans 100 zum Messgut erfolgt.

Das Messgut kann ein Schlauch aus extrudierter Plastikfolie (nicht gezeigt) sein, z.B. aus Polyethylen, dessen Wandstärke mit einem kapazitiv arbeitenden Messorgan 100 überwacht wird. Es sind auch andere Messverfahren bekannt, die beispielsweise mit radioaktiver Strahlung (Gamma- oder Betastrahlung) arbeiten.

Im gezeigten Beispiel erfolgt das Einstellen der Lage der Traverse 14 auf den Drehschemeln 12, 13 mechanisch mit einem sog .Synchronriemen 1213. Mit dieser Konstruktion werden die beiden Drehschemel 12, 13 synchronisiert, d.h. sie können in gleicher Weise gegeneinander hin, bzw. voneinander weg bewegt werden, so dass die Position der Messeinheit 10 auf der jeweiligen Sehne betrachtet, beispielsweise immer auf deren Mittelpunkt bleibt. Wird die Traverse 14 bezogen auf die Bahn 11 radial nach aussen bzw. nach innen bewegt und ist die Messeinheit 10 in der Mitte der von der Traverse 14 mit der Bahn 11 gebildeten Sehne positioniert, bewegt sich die Messeinheit 10 radial nach aussen, bzw. nach innen. Für die in Fig. 1 gezeigte Vorrichtung ist die maximale innere und äussere Lage des Messorgans 100 der Messeinheit 10 mit den beiden strichpunktierten Linien 15 (innen) und 16 (aussen) veranschaulicht.

Der hier nicht dargestellte Blaskopf der Extrusionsanlage, ist beispielsweise im Bereich des Bodens, auf welchem die Vorrichtung zum Positionieren 1 steht, oder ein bis zwei Stockwerke tiefer, konzentrisch zu Bahn angeordnet. Die Folie läuft vom Blaskopf, von unten nach oben und wird mit Luft, die in den Schlauch geblasen wird, aufgeblasen und gekühlt. Für Folien verschiedener Grösse werden verschiedene Blasköpfe eingesetzt. Folienblasanlagen sind im Allgemeinen mehrere Stockwerke hoch. Die Dickenmesseinrichtung mit der Vorrichtung zum Positionieren befindet sich meist ein bis zwei Stockwerke höher als der Extruder und der Blaskopf. Es gibt auch sog. Mehrschichtanlagen, bei denen aus verschiedenen Extrudern verschiedene Materialen zu verschiedenen Stellen des Blaskopfs gepresst werden. Mit diesen Anlagen werden mehrschichtige Folien aus verschiedenen Materialien produziert.

Die Traverse 14 mit der Messeinheit 10 der Vorrichtung zum Positionieren in radialer Richtung (radiale Pfeile) wird auf den jeweiligen Durchmesser der Blase (nicht gezeigt) durch Verschieben der beiden Drehschemel 12 und 13 zueinander hin oder voneinander weg (tangentiale Pfeile) eingestellt. Die Feineinstellung der Position des Messorgans 100 gegenüber dem Messgut erfolgt z.B. mit dem Arm 101. Es ist aber auch möglich die Positionierung allein mit der Traverse vorzunehmen.

Im Betrieb laufen die Drehschemel 12, 13 mit der Traverse 14 auf der Bahn 11 der Vorrichtung zum Positionieren 1 vorwärts und rückwärts oder kontinuierlich umlaufend um das Messgut. Die beiden Drehschemel können zur Fortbewegung einen gemeinsamen Zahnriemen benutzen. Die Synchronisation der beiden Drehschemel erfolgt z.B. dadurch, dass beide Drehschemel je mit einem Schrittmotor angetrieben werden, die von einer Steuerung quarzgenau, aber sonst voneinander unabhängig ansteuert werden. Wenn die Schrittmotoren der beiden Drehschemel mit genau der selben Frequenz und in die gleiche Richtung angesteuert werden, bewegen sich die Drehschemel und damit auch die darauf montierte Traverse um die Folienblase herum, ohne dass sich ihr radialer Abstand (zum Mittelpunkt der Kreisbahn) ändert.

Die Zufuhr der elektrischen Energie kann über Schleifringe, über stromführende Schienen der Bahn 11, aber auch über bewegbare Kabel erfolgen. Die Mess- und Steuersignale können, wie auch schon beschrieben drahtlos übermittelt und/oder auf den Energieleitungen, auf der Speisung aufmoduliert werden. Auf der Basis der gemessenen Signale für die Dicke der Folie kann die Extrusionsanlage beeinflusst und damit die Dicke der Folie korrigiert werden. Dies geschieht beispielsweise durch Beeinflussen von über den Umfang des Blaskopfs angeordnete Blasluft-Kühlelemente oder Heizelemente. Es kann auch vorgesehen sein, Elemente des Blaskopfs mechanisch zu verschieben, beispielsweise besser zu zentrieren oder anders zu positionieren, derart, dass das Dickenprofil der Folie wieder möglichst flach, d.h. gleichmässig wird. Die mittlere Dicke der Folie kann z.B. auch durch Veränderung der Geschwindigkeit, mit welcher die Folie abgezogen wird, beeinflusst d.h. verändert werden.

Der Antrieb eines oder beider Drehschemel 12, 13 auf der Bahn 11 kann z.B. mit einem oder mehreren Elektromotoren in einem oder beiden Drehschemeln, mit Riemen, Seil, mit Linerantrieb oder irgendwie erfolgen.

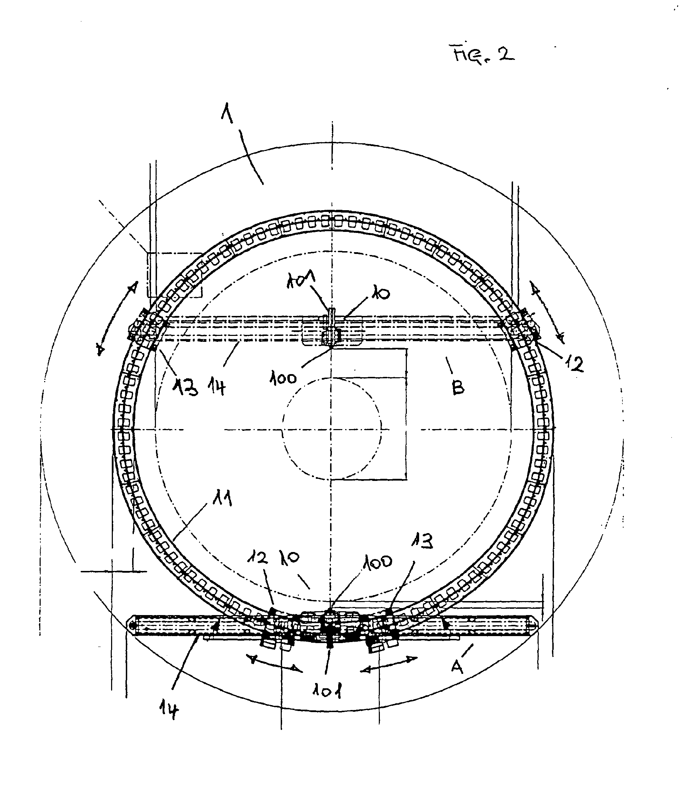

In der Aufsicht von Fig. 2, sind die beiden Extremlagen A und B der Traverse 14 auf den Drehschemeln 12, 13 und der Bahn 11 einer Vorrichtung zum Positionieren 1 schematisch dargestellt. Die Feinpositionierung des Messorgans 100 erfolgt radial mit dem Arm 101. In der äusseren Extremlage A bewegt sich die Messeinheit 10 praktisch über der Bahn 11 und die Traverse 14 bildet angenähert eine Tangente zur Bahn 11. In der inneren Extremlage B bildet die Traverse 14 eine Sehne zur Bahn 11. Die Traverse 14 kann natürlich jede Zwischenposition zwischen den Extremlagen A und B einnehmen.

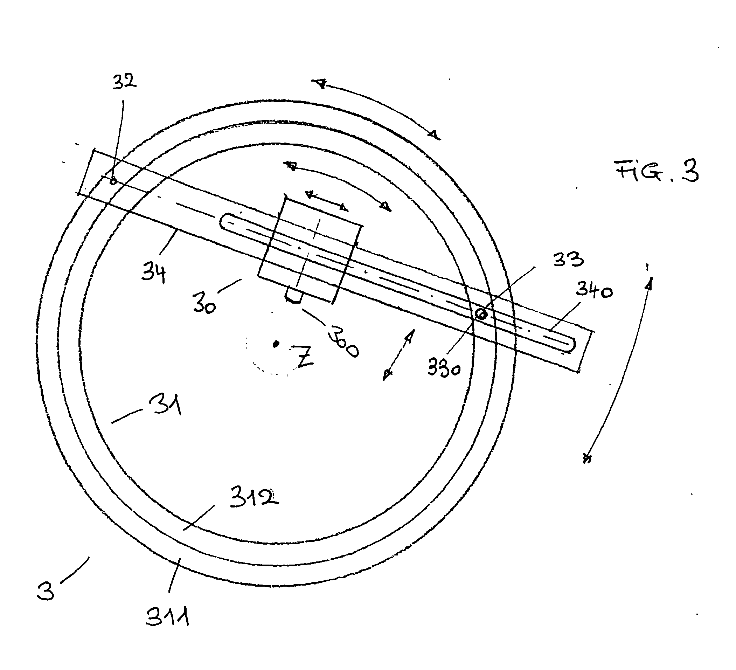

Schliesslich zeigt Fig. 3 schematisch eine weitere Ausbildungsform einer Vorrichtung zum Positionieren 3 in einer Aufsicht. Die Bahn 31 wird hier von zwei gegeneinander vordrehbaren und miteinander drehbaren (tangentiale Pfeile) Ringen 311 und 312 gebildet. Die Traverse 34 ist auf dem Ring 311 mit dem Drehlager 32 verbunden und auf dem Ring 312 mit dem Dreh- und Gleitlager 33 verbunden. Das Dreh- und Gleitlager 33 wird hier von einer Längsnute 340 gebildet, in welcher ein Nocken 330 in Richtung der Längsachse der Traverse 34 verschiebbar ist.

Werden die beiden Ringe 211 und 312 der Bahn 31 gegeneinander verdreht, so wird die Traverse 34 und damit auch die Messeinheit 30 radial gegenüber dem Messgut positioniert. Die Messeinheit 30 kann in Längsrichtung der Traverse 34 verschiebbar sein, um in der Mitte der von der Traverse 34 mit der Bahn 31 gebildeten Sehne positioniert zu werden. Es könnte aber auch vorgesehen sein, die Messeinheit 30 auf der Traverse 34 zum Zentrum Z der Bahn 31 hin zu drehen um das Messorgan 300 der Messeinheit 30 exakt radial auszurichten. Die Feinpositionierung des Messorgans 300 kann z.B. auch hier mit einem nicht in Einzelheiten gezeigten Arm erfolgen. Im Einsatz bewegen sich die beiden Ringe 311 und 312 synchron. Auch diese Vorrichtung zum Positionieren 3 kann im Betrieb gleichsinnig drehen oder sich hin und zurück um das Messgut drehen.

Es wäre auch denkbar, die Traverse je mit einem Dreh- und Gleitlager auf jedem Ring 311, 312 zu lagern und damit beispielsweise eine symmetrische Anordnung der Traverse zur Bahn 31 zu erreichen. Der Antrieb der Bahn 31 und der Ringe 311 und 312 kann mit Einrichtungen wie sie für die andern Beispiele beschreiben sind erfolgen, also mit Elektromotoren u. s. w. Und auch die Übertragung der Mess- und Steuersignale kann in gleicher Weise erfolgen, wie dies im Zusammenhang mit den anderen Beispielen beschrieben wurde.

Es versteht sich, dass bei der Vorrichtung zum Positionieren, Einrichtungen zum Fixieren der eingestellten Traverse auf den Drehschemeln, beispielsweise mit Klemmen, die mit Exzentern betätigt werden, vorgesehen sein können, um die erforderliche Messgenauigkeit zu erreichen. In diesem Fall kann z.B. nur einer der beiden Drehschemel für die Umlaufgeschwindigkeit bestimmend angetrieben sei. Der zweite Drehschemel kann in diesem Fall einen asynchronen Hilfsantrieb aufweisen.

Der Synchronantrieb, z.B. der Antrieb mit Schrittmotor ist erforderlich, um eine gleichmässige Umlaufgeschwindigkeit zu erreichen und um die Dickenmessungen exakt einer bestimmten Position, bzw. Winkelposition des Messorgans zuordnen zu können. Dies erlaubt es, die Messresultate der Winkelposition am Messgut, also am Folienschlauch zuzuordnen.

Im Zusammenhang mit der vorliegenden Erfindung ist der Begriff radial so zu verstehen, dass damit eine exakt radiale Richtung beschrieben wird. Es kann unter dem Begriff radial auch eine Richtung verstanden werden, die über alles betrachtet parallel zu einem Radius nach innen oder nach aussen verläuft.

In den gezeigten Beispielen laufen die Drehschemel auf der Bahn und die Traversen sind auf den Drehschemeln bzw. auf den Ringen gelagert. Und die Messeinheit liegt ebenfalls auf der Traverse. Das braucht nicht unbedingt so zu sein, obschon diese Ausführungsformen gewisse Vorteile bringen. Die Drehschemel könnten genau so gut an der Bahn hängend ausgebildet sein und ebenso könnte die Traverse an der an diesen hängenden Konstruktionen aufgehängt sein. In diesem Falle könnte es dann von Vorteil sein, wenn die Bahn und damit praktisch die ganze Vorrichtung zum Positionieren beispielsweise an der Decke Raumes aufgehängt wäre, um relativ aufwendige Ständerkonstruktionen für die Bahn zu vermeiden.

## Patentansprüche

1. Vorrichtung (1) zum Positionieren einer Messeinrichtung (10), mit einer ringartigen oder bogenförmigen Bahn (11), auf welcher die Messeinrichtung (10) gelagert ist, und zum Positionieren des Messorgans (100) der Messeinrichtung (10) in einer Lage radial zur Bahn (11), **dadurch gekennzeichnet, dass** die Vorrichtung eine Traverse (14) aufweist, welche die Messeinrichtung (10) trägt, sowie Lager (12, 13), die zwischen Bahn (11) und Traverse (14) angeordnet sind, und eine Einrichtung zum Verändern der Lage der Traverse (14) mit der Messeinrichtung (10) gegenüber der Bahn (11) in radialer Richtung zur Bahn (14).

2. Vorrichtung (1) nach Anspruch 1 bei welcher die Lager zwischen Bahn (11) und Traverse (14) Drehschemel (12, 13) sind, die auf der Bahn (11) zueinander hin, voneinander weg und gleichsinnig, mit gleicher oder verschiedener Geschwindigkeit bewegbar sind, und mindestens einer der Drehschemel (12, 13), vorzugsweise beide Drehschemel (12, 13), gegenüber der Traverse (14) verschiebbar sind.

3. Vorrichtung (1) nach Anspruch 2, bei welcher mindestens einer der Drehschemel (12, 13) einen Antriebsmotor, vorzugsweise einen Elektromotor aufweist um die Drehschemel (12, 13) und die Traverse (14) mit der Messeinrichtung (10) auf der Bahn (11) zu bewegen.

4. Vorrichtung (3) nach Anspruch 1, mit einer ringförmigen oder ringsegmentförmigen Bahn (31), die zwei gegeneinander durch Drehung verschiebbare Ringe (311, 312) oder Segmente aufweist, und bei der die Traverse (34) auf der Bahn (31) zweifach gelagert ist und je eines der Lager (32, 33) mit einem der beiden Ringe (311, 312) oder Segmente verbunden ist.

5. Vorrichtung (3) nach Anspruch 4, mit einer Einrichtung zum synchronen Drehen der Ringe (311, 312) oder Segmente der Bahn (31) und/oder zum synchronen Drehen oder synchronen Hin- und Zurückdrehen der Ringe (311, 312) mit der Traverse (34).

6. Vorrichtung nach einem der Ansprüche 1 bis 5, bei welcher die Messeinrichtung (10), in Längsrichtung der Traverse (14) verschiebbar angeordnet ist.

7. Vorrichtung nach einem der Ansprüche 1 bis 6, mit einer Messeinrichtung (10), mit einem Trägerarm (101) auf welchem das Messorgan (100) der Messeinrichtung (10) angeordnet ist und der schräg oder quer zur Längsrichtung der Traverse (14), vorzugsweise in radialer Richtung zur Bahn (11) verschiebbar oder teleskopisch verlängerbar ist.

8. Vorrichtung nach einem der Ansprüche 1 bis 7 mit einer kreisförmige Bahn (11), mit einem Durchmesser im Bereich von einem bis acht Metern, und einer Traverse (14) mit einer Länge im Bereich von 0.5 bis 8 Metern.

9. Vorrichtung nach einem der Ansprüche 1 bis 8 mit einer Messeinrichtung (10) zum Messen der Dicke von Kunststofffolien, mit einem Messsystem das kapazitiv, mit einer Hall-Sonde oder mit radioaktiver Strahlung, insbesondere β-Strahlung oder γ- Strahlung arbeitet.

10. Vorrichtung nach einem der Ansprüche 1 bis 9, bei welcher die Übertragung von Mess- und Steuersignalen von und zur Messeinrichtung (10) aufmoduliert auf die Speisespannung über die Speiseleitung und/oder über separate Signalleitungen und/oder drahtlos erfolgt.

11. Vorrichtung nach einem der Ansprüche 1 bis 10, bei welcher die Übertragung der elektrischen Speisung sowie Mess- und Steuersignalen von bzw. zur bewegbaren Messeinrichtung (10) wenigstens teilweise über Schleifkontakte erfolgt.

12. Vorrichtung nach einem der Ansprüche 1 bis 11, mit einer Einrichtung (1213), welche die Messeinrichtung (10) ortsfest auf der Traverse (14) oder auf der von der Traverse (14) mit der Bahn (11) gebildeten Sehne, vorzugsweise in der Mitte diese Sehne hält.

13. Vorrichtung nach einem der Ansprüche 2 bis 12, bei welcher jeder der Drehschemel (12 ,13) oder der Ringe (311, 312) je einen Schrittmotor für den Antrieb aufweist, und eine Steuerung zum genauen unabhängigen Ansteuern der Schrittmotoren, mit der gleichen Frequenz oder mit ungleichen Frequenzen, und zum Bewegen der Drehschemel (12, 13) oder der Ringe (311, 312) in gleicher Richtung oder in entgegengesetzter Richtung, mit gleicher oder mit unterschiedlicher Geschwindigkeit.

## Claims

1. An apparatus (1) for positioning a measuring device (10), with a ring-like or arcuate track (11) on which the measuring device (10) is supported, and for the positioning of the measuring member (100) of the measuring device (10) at a position radial to the track (11), **characterized in that** the device has a crossbeam (14) which supports the measuring device (10), and bearings (12, 13) which are arranged between the track (11) and the crossbeam (14), and a device for changing the position of the crossbeam (14) with the measuring device (10) opposite the track (11) in a radial direction to the track (14).

2. The apparatus (1) according to Claim 1, in which the bearings between the track (11) and the crossbeam (14) are swivelling bolsters (12, 13) which are movable towards one another, away from one another and in the same direction on the track (11) at the same or at a different speed, and at least one of the swivelling bolsters (12, 13), preferably both swivelling bolsters (12, 13) are displaceable with respect to the crossbeam (14).

3. The apparatus (1) according to Claim 2, in which at least one of the swivelling bolsters (12, 13) has a drive motor, preferably an electric motor, in order to move the swivelling bolsters (12, 13) and the crossbeam (14) with the measuring device (10) on the track (11).

4. An apparatus (3) according to Claim 1, with an annular or ring segment-shaped track (31), which has two rings (311, 312) or segments which are displaceable relative to each other by rotation, and in which the crossbeam (34) is doubly supported on the track (31) and one each of the bearings (32, 33) is connected to one of the two rings (311, 312) or segments.

5. The apparatus (3) according to Claim 4, with a device for the synchronous rotation of the rings (311, 312) or segments of the track (31) and/or for the synchronous rotation or synchronous rotation to and fro of the rings (311, 312) with the crossbeam (34).

6. The apparatus according to any of Claims 1 to 5, in which the measuring device (10) is arranged displaceably in the longitudinal direction of the crossbeam (14).

7. The apparatus according to any of Claims 1 to 6, with a measuring device (10), with a support arm (101) on which the measuring member (100) of the measuring device (10) is arranged and which is displaceably or telescopically extendable obliquely or transversely to the longitudinal direction of the crossbeam (14), preferably in a radial direction to the track (11).

8. The apparatus according to any of Claims 1 to 7, with a circular track (11), with a diameter in the range from one to eight metres, and with a crossbeam (14) with a length in the range from 0.5 to 8 metres.

9. The apparatus according to any of Claims 1 to 8, with a measuring device (10) for measuring the thickness of plastic films, with a measuring system which operates capacitively, with a Hall probe or with radioactive radiation, in particular β radiation or γ radiation.

10. The apparatus according to any of Claims 1 to 9, in which the transmission of measuring and control signals from and to the measuring device (10) is effected by modulation onto the supply voltage via the feed line and/or via separate signal lines and/or in a wireless manner.

11. The apparatus according to any of Claims 1 to 10, in which the transmission of the electric feed and of measuring and control signals from or to the movable measuring device (10) is effected at least in part via sliding contacts.

12. The apparatus according to any of Claims 1 to 11, with a device (1213) which holds the measuring device (10) in a fixed spatial position on the crossbeam (14) or on the chord formed by the crossbeam (14) with the track (11), preferably at the centre of this chord.

13. The apparatus according to any of Claims 2 to 12, in which each of the swivelling bolsters (12, 13) or of the rings (311, 312) has a stepping motor for the drive, and a control for the exact independent controlling of the stepping motors, with the same frequency or with different frequencies, and for moving the swivelling bolsters (12, 13) or the rings (311, 312) in the same direction or in the opposite direction, at the same speed or at a different speed.

## Revendications

1. Dispositif (1) pour le positionnement d'un mécanisme de mesure (10), comprenant une voie annulaire ou arquée (11) sur laquelle est monté le mécanisme de mesure (10), et pour le positionnement de l'organe de mesure (100) du mécanisme de mesure (10) dans une position radiale par rapport à la voie (11), **caractérisé en ce que** le dispositif présente une traverse (14) qui supporte le mécanisme de mesure (10), ainsi que des paliers (12, 13) qui sont disposés entre la voie (11) et la traverse (14), et un mécanisme pour modifier la position de la traverse (14) avec le mécanisme de mesure (10) par rapport à la voie (11) en direction radiale par rapport à la voie (11).

2. Dispositif (1) selon la revendication 1, dans lequel les paliers, entre la voie (11) et la traverse (14), sont des traverses pivotantes (12, 13) qui sont mobiles sur la voie (11) de façon à pouvoir se rapprocher l'un de l'autre, s'éloigner l'un de l'autre et de manière consensuelle, à la même vitesse ou à des vitesses différentes, au moins une des traverses pivotantes (12, 13), de préférence les deux traverses pivotantes (12, 13) étant mobiles par rapport à la traverse (14).

3. Dispositif (1) selon la revendication 2, dans lequel au moins une des traverses pivotantes (12, 13) présente un moteur d'entraînement, de préférence un moteur électrique pour déplacer les traverses pivotantes (12, 13) et la traverse (14) avec le mécanisme de mesure (10) sur la voie (11).

4. Dispositif (1) selon la revendication 1, comprenant une voie annulaire ou en forme de segment annulaire (31), qui présentent deux anneaux (311, 312) aptes à se déplacer par rotation l'un par rapport à l'autre ou deux segments, et dans lequel la traverse (34) est montée en double sur la voie (31), respectivement un des paliers (32, 33) étant relié à un des deux anneaux (311, 312) ou à un des deux segments.

5. Dispositif (3) selon la revendication 4, comprenant un mécanisme pour la rotation synchrone des anneaux (311, 312) ou des segments de la voie (31) et/ou pour la rotation synchrone ou encore pour la rotation synchrone vers l'avant et vers l'arrière des anneaux (311, 312) avec la traverse (34).

6. Dispositif selon l'une quelconque des revendications 1 à 5, dans lequel le mécanisme de mesure (10) est disposé pour pouvoir se déplacer dans la direction longitudinale de la traverse (14).

7. Dispositif selon l'une quelconque des revendications 1 à 6, comprenant un mécanisme de mesure (10) comprenant un bras de support (101) sur lequel est disposé l'organe de mesure (100) du mécanisme de mesure (10) et qui peut se déplacer en inclinaison ou en direction transversale par rapport à la direction longitudinale de la traverse (14), de préférence en direction radiale par rapport à la voie (11) ou qui peut être prolongé par voie télescopique.

8. Dispositif selon l'une quelconque des revendications 1 à 7, comprenant une voie circulaire (11) dont le diamètre se situe dans la plage de un à huit mètres, et une traverse (14) possédant une longueur dans la plage de 0,5 à 8 m.

9. Dispositif selon l'une quelconque des revendications 1 à 8, comprenant un mécanisme de mesure (10) pour la mesure de l'épaisseur de feuilles minces en matière synthétique, comprenant un système de mesure qui travaille de manière capacitive, avec une sonde de Hall ou avec un rayonnement radioactif, en particulier un rayonnement β ou un rayonnement γ.

10. Dispositif selon l'une quelconque des revendications 1 à 9, dans lequel la transmission des signaux de mesure et de commande depuis le mécanisme de mesure (10) et en direction de ce dernier a lieu en étant soumise à une modulation conformément à la tension d'alimentation via le dispositif d'alimentation et/ou via des conducteurs de signaux séparés et/ou sans fil.

11. Dispositif selon l'une quelconque des revendications 1 à 10, dans lequel la transmission de l'alimentation électrique ainsi que des signaux de mesure et de commande depuis le mécanisme de mesure mobile (10), respectivement en direction de ce dernier a lieu au moins en partie via des contacts par frottement.

12. Dispositif selon l'une quelconque des revendications 1 à 11, comprenant un mécanisme (12, 13) qui maintient le mécanisme de mesure (10) immobile sur la traverse (14) ou sur les cordes formées par la traverse (14) avec la voie (11), de préférence au milieu de ces cordes.

13. Dispositif selon l'une quelconque des revendications 2 à 12, dans lequel chacune des traverses pivotantes (12, 13) ou chacun des anneaux (311, 312) présente respectivement un moteur pas à pas pour l'entraînement, et une commande pour l'entraînement indépendant précis des moteurs pas à pas, avec la même fréquence ou avec des fréquences différentes, et pour la mise en mouvement des traverses pivotantes (12, 13) ou des anneaux (311, 312) dans la même direction ou dans des directions opposées, à la même vitesse ou à des vitesses différentes.
